# EUROPEAN PATENT SPECIFICATION

(11) **EP 2 560 786 B1**
(45) Date of publication and mention of the grant of the patent: **08.03.2017**
(21) Application number: 10732482.4
(22) Date of filing: 20.04.2010
(51) Int. Cl.: B23K 37/02, B23K 26/08, B23K 26/10, B23Q 1/01

(54) **METHOD AND DEVICE FOR CUTTING OPENINGS IN FLAT, CONCAVE OR CONVEX SURFACES**
VERFAHREN UND VORRICHTUNG ZUM SCHNEIDEN VON ÖFFNUNGEN IN FLACHE, KONKAVE ODER KONVEXE OBERFLÄCHEN
PROCÉDÉ ET DISPOSITIF POUR DÉCOUPER DES OUVERTURES DANS DES SURFACES PLATES, CONCAVES OU CONVEXES

(43) Date of publication of application: 27.02.2013
(73) Proprietor: Promotech Sp. Z.o.o., 15-620 Bialystok (PL)
(72) Inventor: GOLABIEWSKI, Zbigniew, PL-15-613 Bialystok (PL); FEDYK, Krzysztof, PL-15-533 Bialystok (PL); FEDYK, Marcin, PL-15-533 Bialystok (PL); BORCHERT, Marcin, PL-19-335 Prostki (PL)
(74) Representative: Jedrzejewski, Michal
(86) International application number: PCT/PL2010/000029
(87) International publication number: WO 2011/133050

(56) References cited:
- EP-A1- 0 634 247
- WO-A1-2009/140710
- GB-A- 1 326 153
- GB-A- 2 120 202
- JP-A- 2002 001 568
- US-A- 3 612 502
- US-A- 4 973 819
- US-A- 5 311 790
- US-A1- 2005 224 471

## Description

The object of the invention is a method for cutting openings in flat, concave or convex surfaces using a flame, plasma or laser cutting head. The method can be used for many different applications, but they are particularly useful in the construction of wind towers where it is necessary to cut openings in concave surfaces such as inside pipes forming segments of such towers.

In the present state of the art, various methods of cutting openings in surfaces are known. For the present invention, of importance are methods relating to the preparation of elements of wind towers. The publication WO2006050723 indicates how to manufacture parts of wind towers in which such part is made up of at least one component containing an opening and at least one component without the opening. These elements are manufactured separately and then assembled together to form a ring. The element with an opening is made separately by flame cutting of the element and by its rolling. In the present state of the art, there are no devices that would enable cutting the openings in the tubular elements as well as in the components already installed.

In publication US4973819 A there is described a gantry, having a high powered laser, up to 2,000 watts or larger, mounted on a numerically controlled carriage. The gantry is constructed to support and rapidly move the laser, and a laser delivery system, about a work cell, such that the laser is constantly in close proximity to the working area of a workpiece.

From the publication WO 2009/140710 A1 it is known method for repairing a damage to a metallic substrate, namely in a section of a first surface, especially a continuous sheet metal strip, and/or a section below a first surface having a damage, the section being removed in a cutting manner, especially by milling, from the substrate. A metallic filler element is welded to the substrate, especially by electric welding, in the circular cut-out section obtained in this manner. The surface is then subjected to a cutting treatment and is then optionally polished. The substrate has an additional surface, opposite the first surface. The cut-out section is entirely produced in a cutting manner, the entire metallic substrate being size-reduced, and terminates before the additional surface, and a filler element having a maximum diameter which is larger than that of the cut-out section is welded into it.

In publication US 2005/224471 A1 there is described a method and apparatus for bonding a pair of tubular members are disclosed. First and second end portions of the tubular members are gripped for rotation about their axis. The tubular members are axially rotated and a laser beam is directed radially toward the tubular members to bond them together.

In publication US 4973819 there is described a gantry, having a high powered laser, up to 2,000 watts or larger, mounted on a numerically controlled carriage. The gantry is constructed to support and rapidly move the laser, and a laser delivery system, about a work cell, such that the laser is constantly in close proximity to the working area of a workpiece.

In publication EP 0634247 there is exposed a trolley running rail is movably supported by a supporting device in the shape of a portal crane. A trolley is mounted on the trolley running rail. The trolley carries a vertically running and displaceable bearer. Arranged at its bottom end is a toolhead member rotatable about a horizontal axis. The toolhead member carries tools which can be used alternatively, for drilling/milling, plasma-arc cutting, oxyacetylene flame cutting, gas-jet laser cutting. Rolling trestles movable on rails serve to support tubular workpieces, which can be clamped and rotated in a clamping device of one rolling trestle. Plate-shaped workpieces are carried on a sliding carriage. With this machine tool, workpieces can be worked by different tools in a computer-controlled manner so that no manual interventions are necessary.

In publication GB 2120202 there is exposed a five-axis laser robot for for welding or cutting operations has a depending Z-axis column with an internal Z-axis laser beam path and a wrist at the lower end of the column with internal laser beam paths, wherein the laser robot is adjustable for applying the laser beam from a laser to a workpiece from any point and at any angle within the working volume of the robot.

In document JP 2002001568 there is the method for making the parameter setting for the five-axis- control laser beam machining head 15 of the NC control three-dimensional laser beam machine is characterized as follows; the machine has the head provided with a measuring probe; the attitudes of the U-axis and V-axis of the head are changed in order to form an origin measuring hole and an offset error measuring bole, respectively, in a flat plate material W by cutting and machining; the dimensions of the above measuring holes are measured by the measuring probe; the errors of the origins of the U-axis and V-axis are calculated so as to change parameter settings for the origins of the U-axis and V-axis; and an offset error is calculated in order to change an offset parameter setting.

While in publication US 5311790 there is described a drive system comprises a pair of racks provided in a first direction, a pair of travellers, each of which is capable of moving in the first direction alongside each rack, a connecting member provided in a second direction perpendicular to the first direction, each end of the connecting member is fixed to each traveller, a pair of pinions, each of which engages with each rack and rolls thereon in the first direction, the pinions coaxially connected by a shaft, and a first motor for driving at least one of the travellers in the first direction, wherein the first motor is not mounted on the travellers and the connecting member. With this structure, the movable parts of the drive system are lightened so that high speed operation is made possible.

In the publication of international application WO 2009140710 the invention relates to a method for repairing a damage to a metallic substrate, namely in a section of a first surface, especially a continuous sheet metal strip, and/or a section below a first surface having a damage, the section being removed in a cutting manner, especially by milling, from the substrate. A metallic filler element is welded to the substrate, especially by electric welding, in the circular cut-out section obtained in this manner. The surface is then subjected to a cutting treatment and is then optionally polished. The substrate has an additional surface, opposite the first surface. The cut-out section is entirely produced in a cutting manner, the entire metallic substrate being size-reduced, and terminates before the additional surface, and a filler element having a maximum diameter which is larger than that of the cut-out section is welded into it.

In publication US 3612502 there was exposed anAn apparatus for cutting holes in structures and details having cylindrical surface, comprising: a cutter mounted with a possibility of simultaneous displacement in horizontal and vertical planes; a profiling device adapted to set the mode of the vertical displacement of said cutter; profiling cams of said profiling device; members serving to connect said profiling cams with said cutter, in which members said profiling cams are mounted with a possibility of unobstructed vertical movement independent of each other; a rod serving to additionally couple said cutter and said profiling cams, both the cutter and the cams being connected to said rod by means of pivot joints, the pivot joint of said cutter being mounted with a possibility of displacement along said rod.

In publication GB 1 326 153 A there was exposed a device for cutting a hole in a tube comprises a cutting torch secured to a rod which meshes with a gear which in turn meshes with a follower for following the curvature of the tube, so that when the cutter is rotated by a wheel to form the hole, it follows the vertical movement of the follower. The torch carrying rod is carried by a carriage positionable on guides which are fixed to the rotatable wheel. A slider is connected to the carriage and is movable along a slot in a cross-member which is reciprocable along guides and which carries the gear and a bar connected to a follower roller. When the wheel is rotated by a drive the gas cutter is moved in a circle and the cross-member is reciprocated by the slider. The gear is rotated by the bar when the follower roller moves vertically causing the torch carrying rod to be moved by a corresponding amount so that the distance between the cutter and tube remains constant. The guide is movable by a handwheel to enable the carriage and cutter to be moved away from the intended line of cut in order to initiate the cutting process. The device can be secured to the tube by magnets.

Publication US 2005224471 exposes a method and apparatus for bonding a pair of tubular members are disclosed. First and second end portions of the tubular members are gripped for rotation about their axis. The tubular members are axially rotated and a laser beam is directed radially toward the tubular members to bond them togethe

Nor are there any methods and devices that would enable automatic cutting of openings in vertical, horizontal or oblique elements.

The method of cutting openings in flat, concave, convex, or converging surfaces using a flame, plasma or laser cutting head, is, in the invention, characterized by:
1) measurement of the characteristic points of the outline of the opening to be cut;
2) entering the measurements of the opening to be cut into the device's electronic control unit;
3) designation of the axis or axes of the opening to be cut on the work surface;
4) placement of the device for cutting openings on the work surface;
5) determination of the position of the device for cutting openings on the surface to be cut by means of laser pointers determining the center of the device and the line designating the axis of the opening
6) blocking the central grips and corner grips on the work surface;
7) selection of the shape of the opening to be cut and calculation of the cutting trajectory from saved values of measurement ;
8) cutting parameters are entered into the control unit;
9) positioning the cutting head in a starting point of the opening to be cut;
10) preheating and cutting the surface at the set trajectory;
11) removing the cut out part of the surface;
12)grinding the edges of the opening cut.

Preferably, memory of the control unit stores, among the selectable templates of shapes of the openings cut out, a circle, an ellipse, an ellipse with straight sections, a truncated ellipse, a rectangle, and a rectangle with rounded corners.

Preferably, the edges of the opening cut out are additionally beveled, in that:
1)beside cutting parameters, beveling parameters are entered, such as beveling angle or width, land (threshold) size and beveling method, unilateral or bilateral
2)after the opening is cut, its edges are heated and beveled at the trajectory set.

Preferably, the surface in which the opening is cut is a cylindrical or conical tube, and the device is placed inside the pipe.

Preferably, the surface in which the opening is cut is a cylindrical or conical tube, and the device is placed outside the pipe.

Preferably, with an additional welding process, further phases are performed:
1)the slag is removed from the place of welding;
2)the element to be welded in is placed in the opening, calibrated and positional welds are made;
3)the cutting head is removed and the welding head is installed;
4)the welding process starts;
5)after the assumed weld is completed, the device is removed from the work surface.

Preferably, in case of concave surfaces, the welding process starts from the concave side.

Preferably, in case of convex surfaces, the welding process starts from the convex side.

Preferably, the element welded in is a door or window frame.

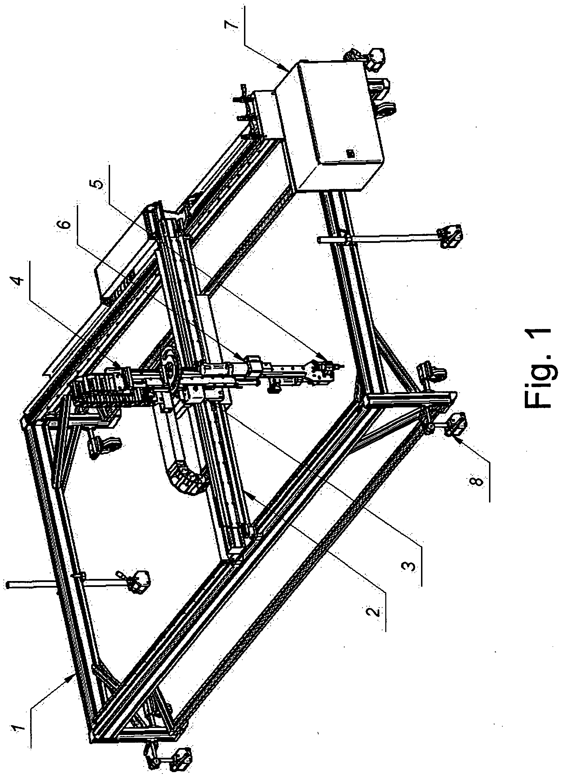

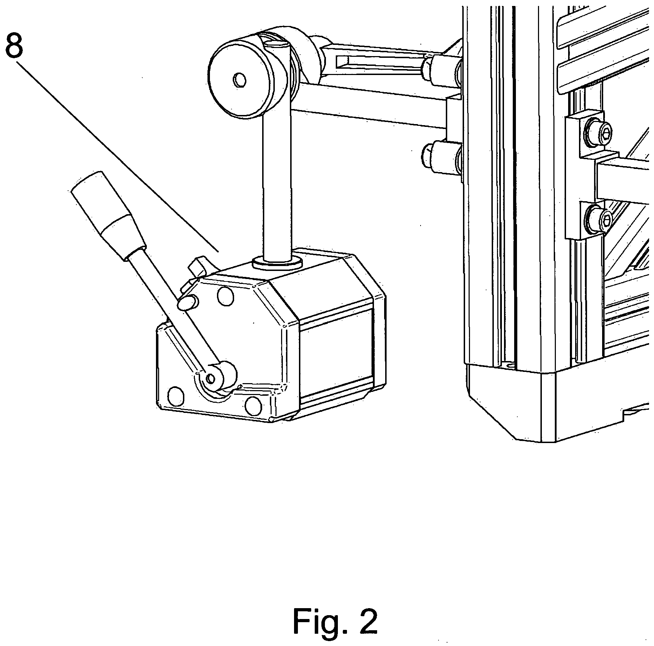

The object of the invention has been presented in specimen execution on drawings, where fig. 1 presents the device as per the invention in axonometric view and fig. 2 presents the grip.

The device, which can be used in the process according to the invention, consists of a mainframe (1) of rectangular shape, equipped with four corner legs and two central legs, with the central legs located, one each, in the middle of the opposite sides of the mainframe (1) and grips (8) are mounted to the legs. Grips (8) are used for fixing and locking device on the work surface Furthermore, the mainframe (1) is equipped with laser pointers. On the mainframe (1), there are guides and elements to move the carriage (2) moving along axis X. On the carriage (2), there are guides and elements to move the cross slide (3) moving along axis Y. In turn, on the cross slide (3) there are elements to move the vertical slide (4) moving along axis Z, to which there is fastened the rotation unit (6) of the working element permitting 360° rotation of the working element, to which there is fastened the tilting unit (5) of the working element. Drive elements of the moving elements (2; 3; 4; 5; 6) of the device are connected to the control unit (7) and power supply. The device's working elements are the cutting module, welding module or polishing module.

The cutting module or the welding module are, as an example, a welding torch, while the polishing module is an angle grinder.

The carriage (2), the cross slide (3) and the vertical slide (4) are powered with the use of racks and pinions.

The rotation unit (6) of the working element is powered by a motor and transmission. Also the tilting unit (5) of the working element is powered by a motor and transmission.

In the grips (8) there are magnets which can be replaced with suction cups or electromagnets. Furthermore, the grips (8) are mounted on the legs as movable and have a mechanism blocking their setting in a selected position.

The device may be powered by standard mains electric current of characteristics 230V 50-60 Hz.

The said device is used in a manner, as per the invention, in which first, characteristic points of the outline of the opening to be cut are measured. For this purpose one can use a completely dedicated unit. Measurement of the points of the opening is made by setting a reference line passing through the hole (baseline does not necessarily coincide with the opening line of symmetry). From the reference line characteristic points are measured (uniformly distributed on the circumference of the hole) in the number of 10 - 50, depending on the size and shape of the hole. The coordinates of individual points are described as the distance from the starting point (Xi) and the distance from the reference line (Yn, Yn +).

| n | Xn | +Yn | -Yn |
|---|---|---|---|
| 1 | 0 | 0 | 0 |
| 2 | X₂ | +Y₂ | -Y₂ |
| ... | ... | ... | ... |
| n | 0 | 0 | 0 |

The data obtained in this way is entered into the device's electronic control unit. Based on the implemented points in the electronic control unit device is generated trajectory of the hole being cut out. Reconstruction of the shape is performed using interpolation of the third kind bonded functions (spline).

Then the axis or axes of the opening to be cut are set on the work surface. Then the device for cutting openings is placed on the work surface and the device for cutting openings is fixed on the surface to be cut, using the laser pointers to determine the center of the device and the line designating the axis of the opening. Then the two central grips (8) are blocked on the work surface, and then the corner grips (8) are blocked on the work surface. In order to determine the position of the surface on which the machine is placed a distance from the lined out line of the hole to a designated location on the machine. The above measurement is made on both sides of the machine (in order to determine a possible convergence of the tube). The measured parameters are introduced into the electronic control unit device in order to adjust the tube model

After this, the cutting unit, in this case a cutting torch, is placed in a starting point of the opening to be cut. In order to indicate the position of the hole it is required to identify the starting point (at the edge of the hole). The shape of the opening to be cut is selected from among templates stored in the memory control unit; such as a circle, an ellipse, an ellipse with straight sections, a truncated ellipse, a rectangle, a rectangle with rounded corners. One can also calculate and determine another cutting trajectory on the basis of stored measurement values. Implemented cutting parameters (e.g. felling burner, hole backlash, etc.) are automatically taken into account in the trajectory of the hole being cut; in the case of bevel constant groove width of the wall element insertion into the hole is kept. The calculation of this distance is determined on the basis of the bevel angle and height of the threshold for the starting point. For future trajectory points bevel angle is varied to maintain a constant width of the groove. In order to indicate the position of the hole it is required to identify the starting point (at the edge of the hole).The surface is pre heated and cut along the desired trajectory, and then the cut portion of the surface is removed. Then the edges of the opening are polished by hand or using a polishing module.

When the opening is cut, one can also perform edge beveling of the opening made in such a way that in addition to the cutting parameters one can introduce beveling parameters, such as beveling angle, fixed or variable, and its value, the width of the welding groove, the land (threshold) size and the beveling method, unilateral or bilateral. While after cutting the opening, its edges are heated and beveled following a set trajectory.

After the process of cutting and beveling of the opening's edges is completed, a process is carried out, if necessary, in which the place of welding is first cleared of the slag. Then the element to be welded in (e.g. a door or window frame) is set in the cut opening, calibrated, and positional welds are made. The cutting module is removed and the welding module is installed, and then the process of welding the frame starts. In the case of concave surfaces, the welding process begins with the concave side. Finally, after the assumed weld is made, the device is removed from the work surface.

The method and the device as per the invention have several unprecedented advantages. The device, owing to its structure, can be used on surfaces of various sections (flat or curved). It can also be placed inside a tube. In addition, it can be applied both horizontally and vertically. Owing to the described structure of the device, as per the invention, the manner of making the openings and welding various elements into them proceeds automatically. Owing to the control system applied, programming of the shape is very fast and does not require sophisticated CAD / CAM software. The standard device includes a library of typical shapes: a rectangle, a circle, an ellipse, an ellipse with a straight line fragment. Light design of the device and user-friendly software permit one to use the device as a portable CNC cutter, which can be placed directly on the work surface and fixed to it with magnets. In this case, the machine can perform any program created on an external PC in the G-CODE format.

## Claims

1. The method of cutting openings in flat, concave, convex, or converging surfaces using a flame, plasma or laser cutting head, **characterized by**:
1) measurement of the characteristic points of the outline of the opening to be cut;
2) entering the measurements of the opening to be cut into the device's electronic control unit;
3) designation of the axis or axes of the opening to be cut on the work surface;
4) placement of the device for cutting openings on the work surface;
5) determination of the position of the device for cutting openings on the surface to be cut by means of laser pointers determining the center of the device and the line designating the axis of the opening
6) blocking on the work surface central grips and corner grips of the device for cutting openings on the work surface;
7) selection of the shape of the opening to be cut and calculation of the cutting trajectory from saved values of measurement;
8) cutting parameters are entered into the control unit;
9) positioning the cutting head in a starting point of the opening to be cut;
10) preheating and cutting the surface at the set trajectory;
11) removing the cut out part of the surface;
12) grinding the edges of the opening cut.

2. The method, according to claim 1, **characterized by** that memory of the control unit stores, among the selectable templates of shapes of the openings cut out, a circle, an ellipse, an ellipse with straight sections, a truncated ellipse, a rectangle, a rectangle with rounded corners.

3. The method, according to claims 1-2, **characterized by** that the edges of the opening cut out are additionally beveled, in that:
1) beside cutting parameters, beveling parameters are entered, such as beveling angle or width, land (threshold) size and beveling method, unilateral or bilateral;
2) after the opening is cut, its edges are preheated and beveled at the trajectory set.

4. The method, according to claims 1-3, **characterized by** that the surface in which the opening is cut, is a cylindrical or conical tube, and the device is placed inside the pipe.

5. The method, according to claims 1-3, **characterized by** that the surface in which the opening is cut, is a cylindrical or conical tube, and the device is placed outside the pipe.

6. The method, according to claims 1-5, **characterized by** that with an additional welding process, further phases are performed:
1) the slag is removed from the place of welding;
2) the element to be welded in is placed in the opening, calibrated and positional welds are made;
3) the cutting module is removed and the welding module is installed;
4) the welding process starts;
5) after the assumed weld is completed, the device is removed from the work surface.

7. The method, according to claim 6, **characterized by** that, in case of concave surfaces, the welding process starts from the concave side.

8. The method, according to claim 6, **characterized by** that in case of convex surfaces, the welding process starts from the convex side.

9. The method, according to claims 6-8, **characterized by** that the element welded in is a door or window frame

## Patentansprüche

1. Methode des Ausschneidens von Öffnungen in flachen, konkaven, konvexen oder konvergenten Oberflächen, unter Verwendung einer Flamme, Plasma oder Laserschneidkopfes, charakteristisch dadurch, dass:
1) umfasst die Messung der, auf dem Umfang der Öffnung zum Ausschneiden, charakteristischen Punkte;
2) umfasst die Einführung der Messergebnisse der Öffnung zum Ausschneiden für die elektronische Steuereinheit des Gerätes;
3) umfasst die Festlegung einer oder mehreren Öffnungsachsen zum Ausschneiden auf der Arbeitsfläche;
4) umfasst die Platzierung des Gerätes zum Öffnungsschneiden auf der Arbeitsfläche;
5) umfasst die Festlegung der Platzierung des Gerätes zum Öffnungsschneiden auf der Arbeitsfläche für den Ausschnitt mithilfe von Laseranzeigen, welche die Mitte des Gerätes und die Linie, welche die Öffnungsachse bestimmt, festlegen;
6) umfasst das Festdrücken auf der Arbeitsfläche der Mittelgriffe und Eckgriffe des Gerätes zum Öffnungsschneiden auf der Arbeitsfläche;
7) umfasst die Auswahl der Öffnungsform zum Ausschneiden und Berechnung der Schneidtrajektorie aufgrund der aufgezeichneten Messergebnisse;
8) umfasst die Einführung der Schneidparameter in die Steuerungseinheit;
9) umfasst das Positionieren des Schneidkopfes im Anfangspunkt der Öffnung zum Ausschneiden;
10) umfasst das Erhitzen und Ausschneiden der Fläche gemäß der festgelegten Trajektorie;
11) umfasst die Entfernung des ausgeschnittenen Teils aus der Fläche;
12) umfasst das Schleifen der Ränder der ausgeschnittenen Öffnung.

2. Die Methode nach Vorbehalt 1, charakteristisch dadurch, dass in dem Speicher der Steuereinheit die auswählbaren Muster der Öffnungsformen zum Ausschneiden gespeichert werden, darunter die Form eines Kreises, Ellipse, Ellipse mit geraden Abschnitten, geschnittenen Ellipse, Rechtecks und Rechtecks mit abgerundeten Ecken.

3. Die Methode nach Vorbehalt 1 oder Vorbehalt 2, charakteristisch dadurch, dass die Ränder der ausgeschnittenen Öffnung zusätzlich abgeschrägt werden, charakteristisch dadurch, dass:
1) außer Parameter betreffend des Schneides werden auch Parameter eingeführt, welche das Abschrägen betreffen, solche wie Winkel oder Abschrägungsbreite, Flächeninhaltgröße (Größenschwelle) und Abschrägungsart, einseitig oder beidseitig;
2) nach dem Ausschneiden werden seine Kanten erhitzt und abgeschrägt, gemäß der festgelegten Trajektorie.

4. Die Methode nach Vorbehalt 1 oder Vorbehalt 2 oder Vorbehalt 3, charakteristisch dadurch, dass die Fläche in der die Öffnung ausgeschnitten wird die Form eines zylindrischen Rohrs oder Kegelrohrs hat und das Gerät wird innerhalb der Rohrleitung platziert.

5. Die Methode nach Vorbehalt 1 oder Vorbehalt 2 oder Vorbehalt 3, charakteristisch dadurch, dass die Fläche in der die Öffnung ausgeschnitten wird die Form eines zylindrischen Rohrs oder Kegelrohrs hat und das Gerät wird außerhalb der Rohrleitung platziert.

6. Die Methode nach Vorbehalt 1 oder Vorbehalt 2 oder Vorbehalt 3 oder Vorbehalt 4 oder Vorbehalt 5, charakteristisch dadurch, dass in dem zusätzlichen Schweißverfahren, weitere Etappen durchgeführt werden:
1) die Schlacke wird von der Schweißstelle entfernt;
2) das Element vorgesehen zum Schweißen innerhalb der Öffnung wird in der Öffnung platziert und kalibriert, danach werden Ankerpunkte ausgeführt;
3) das Schneidmodul wird entfernt, danach wird das Schweißmodul installiert;
4) das Schweißverfahren beginnt;
5) nach dem Abschluss des vorgenommenen Schweißverfahrens wird das Gerät von der Arbeitsfläche entfernt.

7. Die Methode nach Vorbehalt 6, charakteristisch dadurch, dass im Falle einer konkaven Fläche das Schweißverfahren von der konkaven Seite beginnt.

8. Die Methode nach Vorbehalt 6, charakteristisch dadurch, dass im Falle einer konvexen Fläche das Schweißverfahren von der konvexen Seite beginnt.

9. Die Methode nach Vorbehalt 6 oder Vorbehalt 7 oder Vorbehalt 8, charakteristisch dadurch, dass das Schweißelement innerhalb der Öffnung ein Fensterrahmen der Fenstereinfassung ist.

## Revendications

1. Mode d'ajourage dans les surfaces plates, concaves, convexes ou convergentes à l'utilisation de flamme, plasma ou tête à découpage au laser, **caractérisé en ce qu'**il:
1) comprend la mesure des points caractéristiques sur la circonférence de l'ouverture à ajourage ;
2) comprend l'introduction des résultats de mesures de l'ouverture à ajourage dans l'unité de commande électronique d'un dispositif ;
3) comprend la détermination d'un ou quelques axes de l'ouverture à ajourer sur la surface de travail ;
4) comprend le placement du dispositif à ajourage sur la surface de travail ;
5) comprend la détermination de la position du dispositif à ajourage sur la surface à ajourage à l'aide des indices au laser, déterminant le centre du dispositif et ligne déterminant l'axe de l'ouverture ;
6) comprend le serrage sur la surface de travail des poignées centrales et celles de coin du dispositif à ajourage sur la surface de travail ;
7) comprend le choix de la forme d'ouverture à ajourage et calcul de la trajectoire d'ajourage conformément aux résultats des mesure enregistrées ;
8) comprend l'introduction des paramètres d'ajourage à l'unité de commande ;
9) comprend le positionnement de la tête d'ajourage dans le point initial de l'ouverture à ajourage ;
10)comprend le chauffage et ajourage de la surface selon la trajectoire fixée ;
11)comprend l'enlèvement de la surface la partie découpée ;
12)comprend la rectification des bords de l'ouverture ajouré.

2. Mode selon la rev. 1, **caractérisé en ce que** dans la mémoire de l'unité de commande les modèles à choisir des formes ajourées sont enregistrés, dont celles de cercle, ellipse, ellipse avec segments droits, tronc d'ellipse, rectangle et rectangle avec angles arrondis.

3. Mode selon la rev. 1 ou rev. 2, **caractérisé en ce que** les bords de l'ouverture ajourée sont encore chanfreinés, **caractérisé en ce que** :
1) sauf les paramètres concernant l'ajourage, ceux concernant chanfreinage y sont introduits, eux aussi, dont angle ou largeur de chanfreinage, grandeur (seuil de grandeur de chanfreinage) du champ ainsi que mode de chanfreinage, unilatéral ou bilatéral ;
2) l'ajourage une fois fait, ses bords sont chauffés et chanfreinés conformément à la trajectoire fixée.

4. Mode selon soit rev. 1, soit rev. 2, soit rev. 3, **caractérisé en ce que** la surface où l'ajourage a lieu, a la forme du tuyau cylindrique ou conique, le dispositif étant placé à l'intérieur du tuyau.

5. Mode selon soit rev. 1, soit rev. 2, soit rev. 3, **caractérisé en ce que** la surface où l'ajourage a lieu, a la forme du tuyau cylindrique ou conique, le dispositif étant placé à l'extérieur du tuyau.

6. Mode selon soit rev. 1, soit rev. 2, soit rev. 3, soit rev. 4, soit rev. 5, **caractérisé en ce que** dans le processus de soudage supplémentaire, les étapes suivantes sont réalisé :
1) la scorie est enlevée du lieu de soudage ;
2) élément destiné au soudage à l'intérieur de l'ouverture y est placé et calibré, puis les points de greffe sont réalisés ;
3) le module de coupage est enlevé, le module de soudage y étant installé ensuite ;
4) le processus de soudage commence ;
5) le processus de soudage établi une fois terminé, le dispositif est enlevé de la surface de travail.

7. Mode selon la rev. 6, **caractérisé en ce que** dans le cas des surfaces concaves, le procédé de soudage est commencé du côté concave.

8. Mode selon la rev. 6, **caractérisé en ce que** dans le cas des surfaces convexes, le procédé de soudage est commencé du côté convexe.

9. Mode selon soit rev. 6, soit rev. 7, soit rev. 8, **caractérisé en ce que** un élément soudé à l'intérieur de l'ouverture est un bâti ou un dormant de fenêtre.
